# EUROPEAN PATENT SPECIFICATION

(11) **EP 2 554 072 B1**
(45) Date of publication and mention of the grant of the patent: **10.02.2016**
(21) Application number: 11762465.0
(22) Date of filing: 03.03.2011
(51) Int. Cl.: A44B 11/25, B60R 22/12, B60R 22/30

(54) **TONGUE**
ZUNGE
LANGUETTE

(30) Priority: 30.03.2010 JP 2010079721
(43) Date of publication of application: 06.02.2013
(73) Proprietor: Ashimori Industry Co., Ltd., Osaka-shi Osaka 550-0014 (JP)
(72) Inventor: YAMAGUCHI Ryuta, Settsu-shi Osaka 566-0001 (JP)
(74) Representative: Grünecker Patent- und Rechtsanwälte PartG mbB
(86) International application number: PCT/JP2011/054857
(87) International publication number: WO 2011/122225

(56) References cited:
- DE-A1- 4 239 812
- JP-A- 5 184 412
- JP-A- 5 184 412
- JP-A- 5 211 908
- JP-A- 2009 018 003
- JP-U- H0 549 523
- JP-U- S58 182 755
- JP-Y2- 2 032 526
- US-A- 4 893 874
- US-A- 5 100 176

## Description

### TECHNICAL FIELD

The present invention relates to a tongue which is connected to a webbing and is engaged with a buckle device in a detachable manner.

### BACKGROUND ART

Conventionally, there have been proposed various types of tongues which are connected to a webbing and are engaged with a buckle device in a detachable manner.

For instance, in a webbing-length adjustment device housed in a plastic casing, a long hole is arranged at a central part of a bottom plate and further, projecting pieces are each formed at both sides on a front part of the bottom plate. An adjustment bar is arranged over the long hole so as to freely slide back and forth.

Then, a webbing is inserted through the long hole from an outside of the bottom plate, guided upward to make a U-turn at the adjustment bar and finally drawn out to the outside of the bottom plate through the long hole. Further, in front of the adjustment bar, an auxiliary bar placed in parallel with the adjustment bar is arranged so as to freely slide back and forth. Between the auxiliary bar and the projecting pieces, a spring is arranged, whereby, owing to elastic force, the webbing is held tight between the auxiliary bar and the adjustment bar and further, the adjustment bar is pushed rearward by means of the auxiliary bar. There has been known a webbing-length adjustment device for seatbelt configured as described above (for instance, refer to Japanese Examined Utility Model Application Publication No. 02-032526 or JPS58182755U)

### DISCLOSURE OF THE INVENTION

### PROBLEMS TO BE SOLVED BY THE INVENTION

In the conventional webbing-length adjustment device for seatbelt, the webbing is continuously held tight between the auxiliary bar and the adjustment bar. Accordingly, such configuration can prevent the webbing from slipping by inches (hereinafter referred to as "microslip") which is caused by an intermittent tension added to the webbing as an occupant moves frontward, etc. when wearing a seatbelt.

However, in the webbing-length adjustment device for seatbelt mentioned above, it is required to slidably arrange the auxiliary bar in front of the adjustment bar, which leads to a problem of increase in number of assemblage parts.

The present invention has been made to solve the above described problems and an object thereof is to provide a tongue which can reduce the number of assemblage parts and prevent the microslip.

### MEANS FOR SOLVING THE PROBLEMS

To achieve the object, there is provided an inventive tongue comprising: a tongue plate including an engagement portion which is to be engaged with a buckle device and arranged so as to protrude from a substantially central position with reference to a front edge portion of the tongue plate, and an insertion hole which is formed at a substantially central part of the tongue plate so as to allow insertion of a folded portion of a webbing folded back in a longitudinal direction; a housing case in a substantially box form for housing the central part of the tongue plate, the housing case including a through hole which is formed at a position meeting with the insertion hole of the tongue plate so as to allow insertion of the webbing, and a slit hole formed at a front edge portion of the housing case so as to allow insertion of the engagement portion; a stopper bar, with the folded edge of the webbing hung therearound, which is arranged to straddle over the insertion hole of the tongue plate and is allowed to slide back and forth with reference to the tongue plate; and an urging unit which urges the stopper bar so as to slide the stopper bar rearward while coming in contact with a pair of front end surfaces on a pair of engagement parts provided at longitudinal ends of the stopper bar, wherein the housing case includes a plurality of ribs which are arranged upright on an inner surface thereof along a front-rear direction so as to press the webbing which is arranged to face the inner surface and hung around the stopper bar, and wherein the plurality of ribs are arranged in parallel to one another in a direction orthogonal to a sliding direction of the stopper bar.

In the above tongue, when the stopper bar with the webbing hung thereaound is housed in the housing case, the stopper bar is urged rearward by the urging unit. Accordingly, the webbing is urged so as to come in contact with the ribs between the stopper bar and the plurality of ribs which are arranged upright on the inner surface of the housing case, and the microslip is prevented. Further, since the plurality of ribs are arranged upright along a front-rear direction on the inner surface of the housing case, the webbing can smoothly be moved in adjusting length of the webbing.

Further, since the stopper bar is urged rearward by the urging unit, the stopper bar is further pushed and moved toward the rib side when a tension is applied to the webbing. Then, the webbing hung around the stopper bar is pressed so as to make inroads into the plurality of ribs, whereby the webbing can effectively be retained. Further, since the above effect is realized by simply arranging the stopper bar and the urging unit within the housing case, the number of assemblage parts can be reduced.

In the tongue of the present invention mentioned above, each of the plurality of ribs includes an edge face portion which presses the webbing, the edge face portion including a slanted face portion which extends obliquely frontward so as to press a rear edge portion of the webbing hung around the stopper bar urged in a rearward by the urging unit.

In the above tongue, since the stopper bar is urged rearward by the urging unit, the webbing hung around the stopper bar is more effectively pressed so as to make inroads into the slanted face portion of each of the plurality of ribs which are arranged upright on the inner surface of the housing case. Thus, the webbing hung around the stopper bar is reliably held between the plurality of ribs and the stopper bar so as to effectively prevent the microslip.

Further, in the tongue of the present invention mentioned above, each of the plurality of ribs includes a planar face portion facing the stopper bar urged in the rearward by the urging unit from a front edge portion of the slanted face portion.

In the above tongue, the plurality of ribs are formed so that each of those includes the planar face portion facing the stopper bar urged by the urging unit rearward from the front edge portion of the slanted face portion. Thereby, the plurality of ribs can be elongated and the strength of the housing case can thus be enhanced.

### BRIEF DESCRIPTION OF THE DRAWINGS

FIG. 1 is an exploded perspective view of a tongue according to a present embodiment;
FIG. 2 is a rear view of a tongue plate which makes up the tongue;
FIG. 3 is a bottom view of the tongue plate;
FIG. 4 is a side view of the tongue plate;
FIG. 5 is a cross sectional view of the tongue plate taken along arrow A-A in Fig. 3;
FIG. 6 is a plain view of a stopper bar which makes up the tongue;
FIG. 7 is a cross sectional view of the stopper bar taken along line B-B in Fig. 6;
FIG. 8 is a plain view of a housing case which makes up the tongue in which twisted coil springs are arranged with a lid portion being opened;
FIG. 9 is a side view of the housing case;
FIG. 10 is a cross sectional view of the housing case taken along line C-C in Fig. 8;
FIG. 11 is a cross sectional view of the housing case taken along line D-D in Fig. 8;
FIG. 12 is an explanatory diagram of the tongue with a part of inside seen through;
FIG. 13 is a cross sectional diagram of the tongue in case no load is applied to a webbing;
FIG. 14 is a cross sectional diagram of the tongue in case a load is applied to the webbing;
FIG. 15 is a perspective view of a housing case for use in a tongue according to another embodiment; and
FIG. 16 is a plain view of a housing case for use in a tongue according to another embodiment.

### BEST MODES FOR CARRYING OUT THE INVENTION

Hereinafter, one embodiment of the tongue according to the present invention will be described in detail while referring to the accompanying drawings.

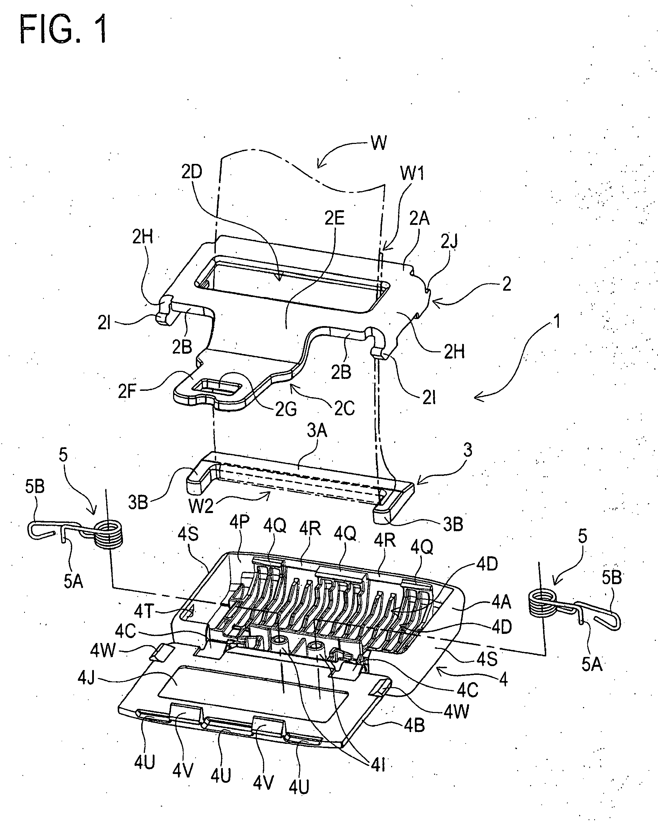

As shown in Fig. 1, a tongue I according to the present embodiment basically consists of a tongue plate 2, a stopper bar 3 and a housing case 4.

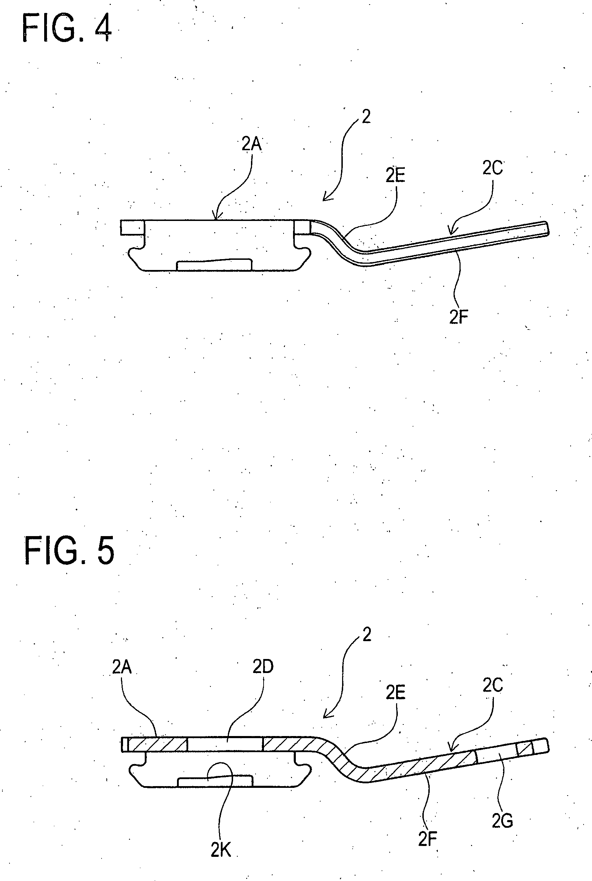

The tongue plate 2 will be described based on Fig. 1 through Fig. 5. The tongue plate 2 basically consists of a plate main body 2A in a substantially rectangular form, an engagement portion 2C, and an insertion hole 2D. The engagement portion 2C is arranged so as to protrude frontward from a substantially central position of a front edge portion 2B of the plate main body 2A. The insertion hole 2D is formed at a substantially central part of the plate main body 2A.

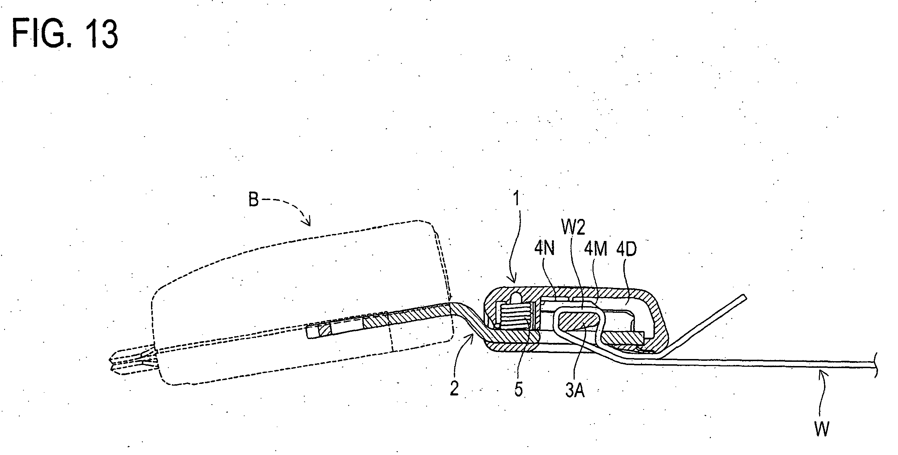

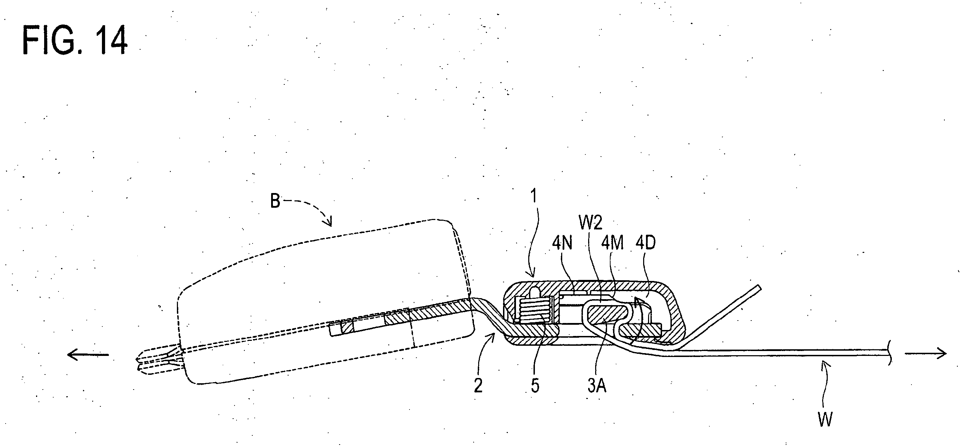

Here, as shown in Fig. 1, the engagement portion 2C includes a slanted portion 2E and a horizontal portion 2F. The slanted portion 2E extends from the front edge portion 2B so as to slant downward. The horizontal portion 2F extends in a horizontal direction from an end of the slanted portion 2E. An engagement hole 2G in a rectangular form is arranged in the horizontal portion 2F so as to be engaged with an engagement member of a buckle B (refer to Fig. 13 and Fig. 14). A part W1, a part of a webbing W folded back in length direction is inserted through the insertion hole 2D, as shown in Fig. 1.

A pair of drooping portions 2H are formed at longitudinal end portions of the plate main body 2A. A pair of projecting portions 21 are formed so as to project frontward from lower ends of the drooping portions 2H. The pair of projecting portions 21 are inserted and fitted in recess portions (not shown) formed at a front side of the housing case 4. Similarly, a pair of projecting portions 2J are formed so as to project rearward from the lower ends of the drooping portions 2H, and are inserted and fitted in recess portions (not shown) formed at a rear side of the housing case 4.

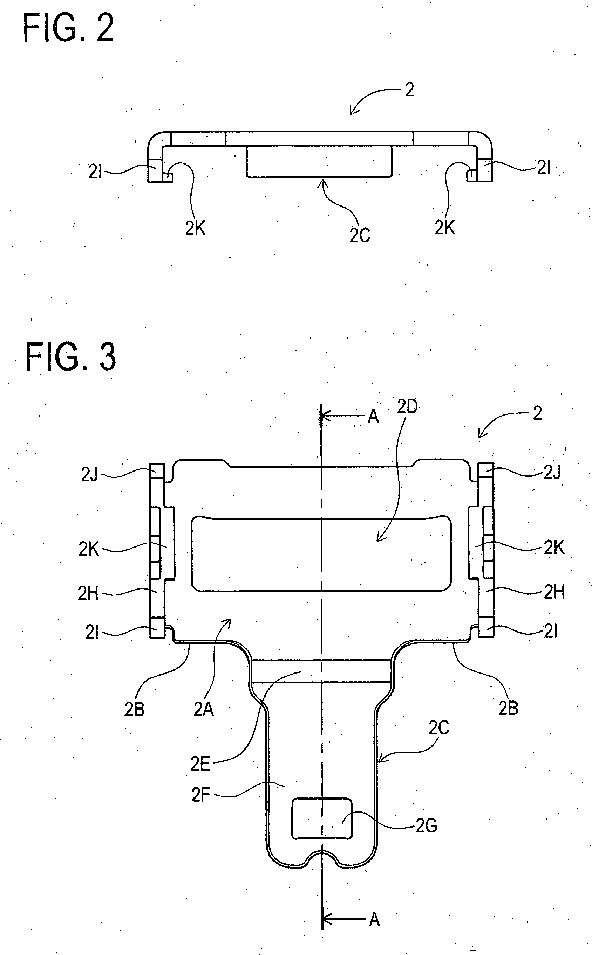

Further, as shown in Fig. 2, on inner sides of the pair of drooping portion 2H, a pair of slide movement guide portions 2K are each formed to guide the stopper bar 3 to be described later. More specifically, the stopper bar 3 is slided back and forth with respect to the plate main body 2A by the pair of slide movement guide portions 2K.

As shown in Fig. 1, Fig. 6 and Fig. 7, the stopper bar 3 is composed of a webbing support portion 3A and guide support portions 3B. The webbing support portion 3A is wrapped with a folded portion W2 of the webbing W. The guide support portions 3B are formed so as to project frontward from both end portions of the webbing support portion 3A.

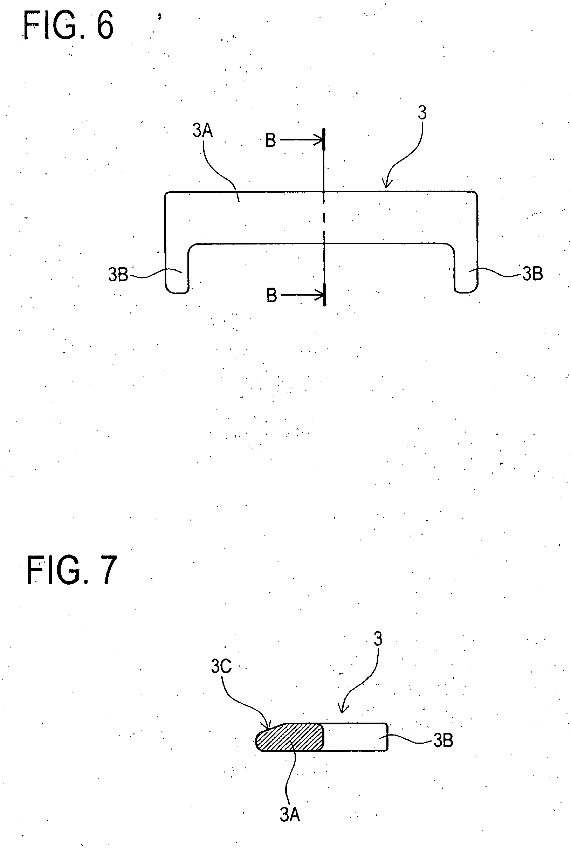

As shown in Fig. 7, in the webbing support portion 3A, a slanted portion 3C is formed so as to slant downward in a rear direction. The guide support portions 3B are mounted on the slide movement guide portions 2K of the tongue plate 2. The stopper bar 3 is thus arranged striding over the insertion hole 2D of the tongue plate 2 and allowed to slide back and forth.

The housing case 4 is a case for housing the plate main body 2A of the tongue plate 2. Specifically, a housing main body 4A and a lid member 4B are integrally formed into a box-like form which is made openable and closable by means of a pair of connecting portions 4C. A plurality of ribs 4D are sequentially arranged upright along a front-rear direction on an inner surface so as to extend from a rear wall to a bottom wall,in the housing main body 4A.

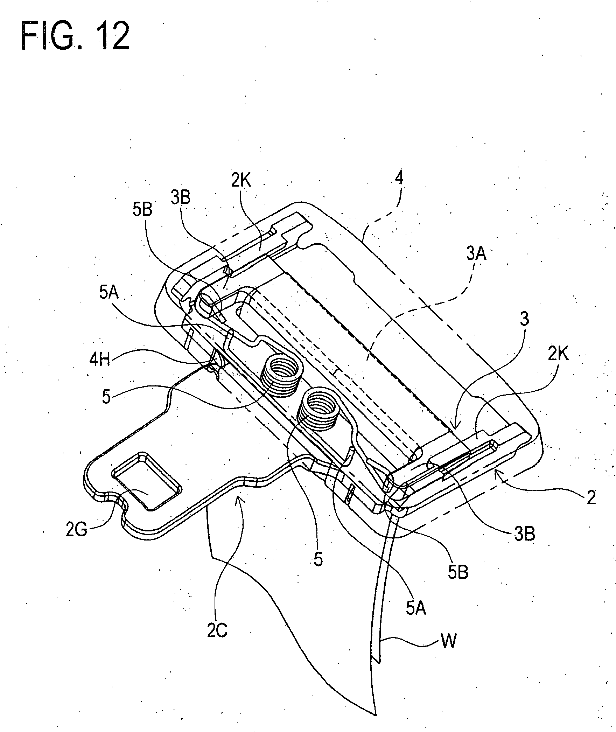

Between a front edge portion 4E of the housing main body 4A and an end portion 4F of the lid member 4B, and also between the pair of connecting portions 4C, a gap 4G is formed, which serves as a slit hole 4H that allows insertion of the engagement portion 2C of the tongue plate 2 therethrough when the lid member 4B is closed to fit in the housing main body 4A (refer to Fig. 12).

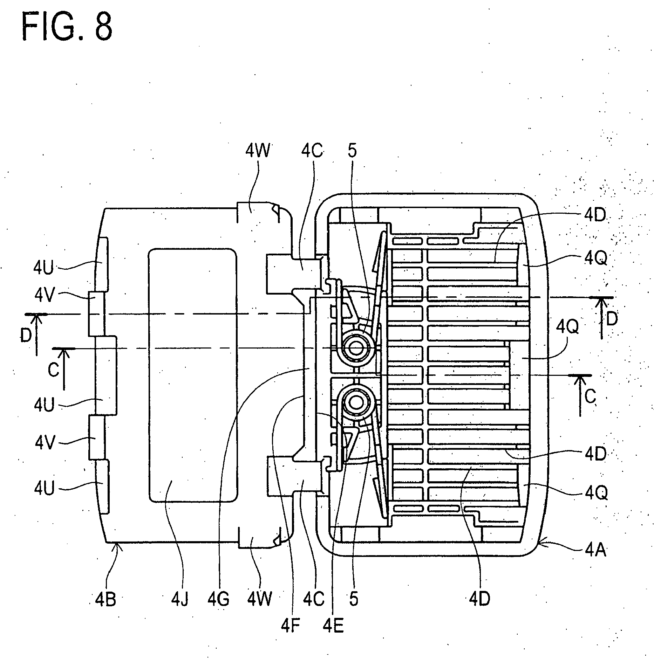

A pair of spring support portions 41 are arranged on a front end side of the housing main body 4A. A pair of twisted coil springs 5 are placed on the corresponding pair of spring support portions 41. As shown in Fig. 8, end portions 5A of the pair of twisted coil springs 5 are engaged with an inner wall of the front edge portion 4E of the housing main body 4A, and other end portions 5B are free end portions. The other end portions 5B of the pair of twisted coil springs 5 are engaged in contact with front end surfaces of the corresponding pair of guide support portions 3B (refer to Fig. 12). Thus, with its spring force, each twisted coil spring 5 urges the stopper bar 3 so as to slide the stopper bar 3 rearward.

In the lid member 4B, a through hole 4J which allows the webbing W to pass therethrough is formed at a position meeting with the insertion hole 2D of the tongue plate 2. The webbing W is inserted through the through hole 4J of the lid member 4B and further, through the insertion hole 2D of the tongue plate 2.

In the housing main body 4A, three elastic engagement pieces 4Q are formed on a rear wall 4P. Between respective adjoining elastic engagement pieces 4Q, two engagement portions 4R are formed. Further, a pair of engagement grooves 4T are formed on a pair of side walls 4S. On the other hand, in the lid member 4B, three engagement portions 4U and two elastic engagement pieces 4V are formed to correspond with the three elastic engagement pieces 4Q and the two engagement portions 4R, respectively, of the housing main body 4A, and further, a pair of elastic engagement pieces 4W are formed to correspond with the pair of engagement grooves 4T of the housing main body 4A.

Thus, as shown in Fig. 12, the engagement portion 2C of the tongue plate 2, to which the stopper bar 3 with the webbing W hung therearound is mounted, is inserted through the slit hole 4H. The other portions 5B of the pair of twisted coil springs 5 are made to come in contact with the respective front end surfaces of the guide support portions 3B. Further, the plate main body 2A of the tongue plate 2 is pressed into the housing main body 4A, whereby a rear edge portion of the plate main body 2A is elastically engaged with the respective elastic engagement pieces 4Q so that the tongue plate 2 is fixed in the housing main body 4A.

Once the lid member 4B is closed to fit in the housing main body 4A by rotating the lid member 4B by means of the connecting portions 4C, the plastic engagement pieces 4V are elastically engaged with the respective engagement portions 4R and further, the elastic engagement pieces 4W are elastically engaged with the respective engagement grooves 4T. Thus, just a one-touch operation of closing the lid member 4B to fit in the housing main body 4A enables the elastic engagement pieces and the engagement portions to elastically engage with each other so that the housing case 4 can easily be assembled with the tongue plate 2 housed therein.

Here, there will be explained about configuration of the ribs 4D formed on the housing main body 4A of the housing case 4. The respective ribs 4D are arranged in parallel to one another in a direction orthogonal to a sliding direction of the stopper bar 3.

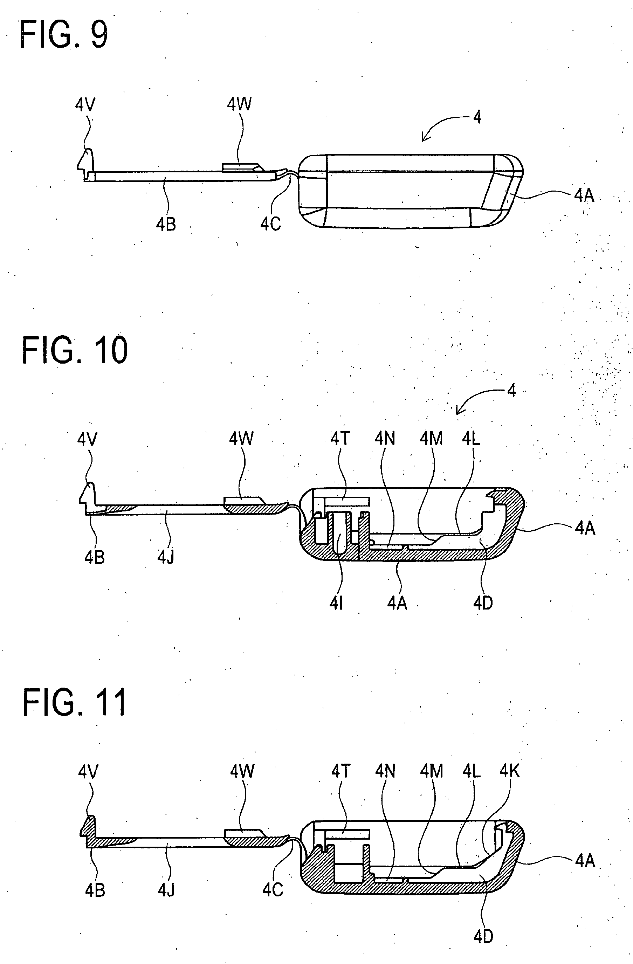

Further, as shown in Fig. 10 and Fig. 11, each rib 4D has a first slanted portion 4K, a first horizontal portion 4L, a second slanted portion 4M and a second horizontal portion 4N in this order as extending from the rear wall to the bottom wall of the housing main body 4A. Of those portions, each second slanted portion 4M includes a slanted surface slanted down in a front direction from the first horizontal portion 4L. The second slanted portions 4M serves to press the folded portion W2 of the webbing W hung around the webbing support portion 3A of the stopper bar 3. The planar second horizontal portions 4N are positioned to face the stopper bar 3 which is kept in a state being urged rearward by the twisted coil springs 5.

There will be explained a case that no load is applied to the webbing W while the engagement portion 2C of the tongue plate 2 is engaged with the buckle B in the tongue 1 configured as described above. As shown in Fig. 13, the stopper bar 3 is urged at its both sides by the two twisted coil springs 5 toward a rib 4D side, whereby the folded portion W2 of the webbing W that is hung around the webbing support portion 3A of the stopper bar 3 is urged so as to come into contact with the ribs 4D between the stopper bar 3 and the second slanted portions 4M of the ribs 4D. Consequently, the webbing W is effectively prevented from microslipping.

In contrast, in case that a load is applied to the webbing W by a tension added to the webbing W while the engagement portion 2C of the tongue plate 2 is engaged with the buckle B, the stopper bar 3 is furthermore pushed and moved toward the rib 4D side so that the webbing W is strongly pressed against the second slanted portions 4M of the ribs 4D, whereby the webbing W makes inroads thereinto further. Thus, the webbing W is effectively retained.

As explained above, in the tongue 1 according to the present embodiment, when the stopper bar 3 with the webbing W hung thereaound is housed in the housing case 4, the stopper bar 3 is urged rearward by the twisted coil springs 5. Accordingly, the webbing W is urged so as to come in contact with the ribs 4D between the stopper bar 3 and the plurality of ribs 4D which are sequentially arranged upright on the inner surface from the rear wall to the bottom wall of the housing case 4. Thereby, the microslip is prevented. Further, since the plurality of ribs 4D are arranged upright along a front-rear direction on the inner surface from the rear wall to the bottom wall of the housing main body 4A in the housing case 4, the webbing W can smoothly be moved in adjusting length of the webbing W.

Further, since the stopper bar 3 is urged rearward by the twisted coil springs 5, the stopper bar 3 is further pushed and moved toward the rib 4D side when a tension is applied to the webbing W. Thereby, the webbing W hung around the stopper bar 3 is strongly pressed against the plurality of ribs 4D. The webbing W thus makes inroads into the plurality of ribs 4D, whereby the webbing W can be reliably retained. Further, since the above effect is realized by simply arranging the stopper bar 3 and the twisted coil springs 5 within the housing case 4, the number of assemblage parts can be reduced.

Further, in the tongue 1 mentioned above, since the stopper bar 3 is urged rearward by the pair of twisted coil springs 5, the webbing W hung around the stopper bar 3 is more effectively pressed by the second slanted portions 4M of the plurality of ribs 4D which are arranged upright on the inner surface from the rear wall to the bottom wall of the housing main body 4A in the housing case 4. Thus, the webbing W hung around the stopper bar 3 is firmly held between the plurality of ribs 4D and the stopper bar 3 so as to reliably prevent the microslip.

Further, in the tongue 1 mentioned above, the plurality of ribs 4D are formed so as to include the planar second horizontal portions 4N facing the stopper bar 3 urged by the twisted coil springs 5 rearward from front edge portions of the second slanted portions 4M. Thereby, the plurality of ribs 4D can thus be elongated, and strength of the housing case 4 can be enhanced.

The present invention is not limited to the above-described embodiment, but various improvements and alterations can be made thereto without departing from the spirit of the present invention.

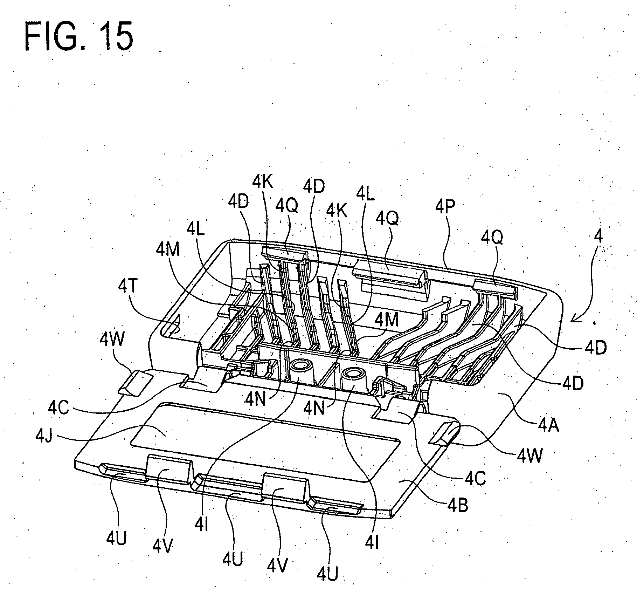

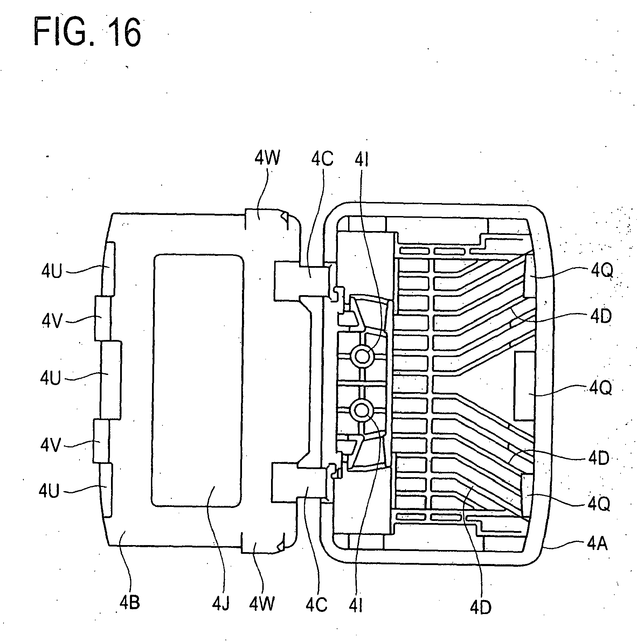

In the housing case 4 of the tongue 1 according to the embodiment described above, the plurality of ribs 4D are formed on the inner surface extending from the rear wall to the bottom wall of the housing main body 4A so as to be parallel with one another and also linearly along a front-rear direction of the housing main body 4A. However, there does not need to be limited to that embodiment. For instance, as shown in Fig. 15 and Fig. 16, a housing main body 4A may be divided in two areas at a substantially central line. In each area thus divided, first slanted portions 4K, first horizontal portions 4L and second slanted portions 4M of respective ribs 4D may be formed obliquely toward a central part while second slanted portions 4N are formed mutually in parallel.

## Claims

1. A tongue (1) comprising:
a tongue plate (2) including an engagement portion (2F) which is to be engaged with a buckle device and arranged so as to protrude from a substantially central position with reference to a front edge portion of the tongue plate (2), and an insertion hole (2D) which is formed at a substantially central part of the tongue plate (2) so as to allow insertion of a folded portion of a webbing (W) folded back in a longitudinal direction;
a housing case (4) in a substantially box form for housing the central part of the tongue plate (2), the housing case (4) including a through hole (43) which is formed at a position meeting with the insertion hole (2D) of the tongue plate (2) so as to allow insertion of the webbing (W), and a slit hole (4H) formed at a front edge portion of the housing case (4) so as to allow insertion of the engagement portion (2F);
a stopper bar (3), with the folded portion of the webbing (W) hung therearound, which is arranged to straddle over the insertion hole (2D) of the tongue plate (2) and is allowed to slide back and forth with reference to the tongue plate (2); and
**characterized in that**
an urging unit (5) which urges the stopper bar (3) so as to slide the stopper bar (3) rearward while coming in contact with a pair of front end surfaces on a pair of engagement parts (3B) provided at longitudinal ends of the stopper bar (3),
wherein the housing case (4) includes a plurality of ribs (4D) which are arranged upright on an inner surface thereof along a front-rear direction so as to press the webbing (W) which is arranged to face the inner surface and hung around the stopper bar (3), and
wherein the plurality of ribs (4D) are arranged in parallel to one another in a direction orthogonal to a sliding direction of the stopper bar (3).

2. The tongue (1) according to claim 1, wherein each of the plurality of ribs (4D) includes an edge face portion which presses the webbing (W), the edge face portion including a slanted face portion which extends obliquely frontward so as to press a rear edge portion of the webbing (W) hung around the stopper bar urged in a rearward by the urging unit (5).

3. The tongue (1) according to claim 2, wherein each of the plurality of ribs (4D) includes a planar face portion facing the stopper bar (3) urged in the rearward by the urging unit (5) from a front edge portion of the slanted face portion.

## Patentansprüche

1. Gurtzunge (1), die umfasst:
eine Gurtzungen-Platte (2), die einen Eingriffsabschnitt (2F), der mit einer Gurtschlossvorrichtung in Eingriff gebracht wird und so angeordnet ist, dass er von einer im Wesentlichen mittigen Position in Bezug auf einen Vorderkantenabschnitt der Gurtzungen-Platte (2) vorsteht, sowie eine Einführöffnung (2D) enthält, die in einem im Wesentlichen mittigen Teil der Gurtzungen-Platte (2) so ausgebildet ist, dass Einführung eines umgeschlagenen Abschnitts eines Gurtbandes (W) zugelassen wird, der in einer Längsrichtung umgeschlagen ist;
ein Aufnahmegehäuse (4) in einer im Wesentlichen kastenartigen Form zum Aufnehmen des Mittelteils der Gurtzungen-Platte (2), wobei das Aufnahmegehäuse (4) eine Durchgangsöffnung (43), die an einer Position ausgebildet ist, die mit der Einführöffnung (2D) der Gurtzungen-Platte (2) zusammentrifft, so dass Einführung des Gurtbandes (W) zugelassen wird, und eine Schlitzöffnung (4H) enthält, die an einem Vorderkantenabschnitt des Aufnahmegehäuses (4) ausgebildet ist, so dass Einführung des Eingriffsabschnitts (2F) zugelassen wird;
einen Anschlagriegel (3), um den der umgeschlagene Abschnitt des Gurtbandes (W) herum gehängt ist und der so angeordnet ist, dass er sich quer über die Einführöffnung (2D) der Gurtzungen-Platte (2) erstreckt und der in Bezug auf die Gurtzungen-Platte (2) hin- und her gleiten kann; und
**gekennzeichnet durch**
eine Drückeinheit (5), die den Anschlagriegel (3) so drückt, dass der Anschlagriegel (3) nach hinten geschoben wird, wenn sie in Kontakt mit einem Paar vorderer Endflächen an einem Paar Eingriffsteile (3B) kommt, die sich an Längsenden des Anschlagriegels (3) befinden,
wobei das Aufnahmegehäuse (4) eine Vielzahl von Rippen (4D) enthält, die aufrechtstehend an einer Innenfläche desselben in einer Längsrichtung so angeordnet sind, dass sie das Gurtband (W) pressen, das so angeordnet ist, dass es der Innenfläche zugewandt ist und um den Anschlagriegel (3) herum gehängt ist, und
wobei die Vielzahl von Rippen (4D) parallel zueinander in einer Richtung senkrecht zu einer Gleitrichtung des Anschlagriegels (3) angeordnet sind.

2. Gurtzunge (1) nach Anspruch 1, wobei jede der Vielzahl von Rippen (4D) einen Randflächenabschnitt enthält, der das Gurtband (W) presst und der Randflächenabschnitt einen schrägen Flächenabschnitt enthält, der sich geneigt nach vorn erstreckt und einen Hinterkantenabschnitt des Gurtbandes (W) presst, der um den Anschlagriegel herum gehängt ist, der durch die Drückeinheit (5) nach hinten gedrückt wird.

3. Gurtzunge (1) nach Anspruch 2, wobei jede der Vielzahl von Rippen (4D) einen planen Flächenabschnitt enthält, der dem Anschlagriegel (3), der durch die Drückeinheit (5) nach hinten gedrückt wird, von einem Vorderkantenabschnitt des schrägen Flächenabschnitts her zugewandt ist.

## Revendications

1. Languette (1) comprenant :
une plaque formant languette (2) incluant une partie de mise en prise (2F) qui doit être engrenée avec un dispositif formant boucle, et agencée de façon à faire saillie depuis une position sensiblement centrale en faisant référence à la partie de bord avant de la plaque formant languette (2), et un trou d'insertion (2D) qui est formé au niveau d'une partie pratiquement centrale de la plaque formant languette (2) de façon à permettre l'insertion d'une partie pliée appartenant à une sangle (W) repliée dans la direction longitudinale,
un boîtier de logement (4) pratiquement sous la forme d'une boîte destinée à héberger la partie centrale de la plaque formant languette (2), le boîtier de logement (4) incluant un trou traversant (43) qui est formé au niveau d'une position en face du trou d'insertion (2D) de la plaque formant languette (2) de façon à permettre l'insertion de la sangle (W), ainsi qu'un trou en forme de fente (4H) formé au niveau de la partie de bord avant du boîtier de logement (4) de sorte à permettre l'insertion de la partie d'engrènement (2F),
une barre formant butée (3) avec la partie pliée de la sangle (W) enroulée autour de celle-ci, qui est agencée pour chevaucher le trou d'insertion (2D) de la plaque formant languette (2) et qui peut coulisser d'avant en arrière par rapport à la plaque formant languette, et
**caractérisée en ce que**
une unité de sollicitation (5) qui contraint la barre formant butée (3) de sorte à faire coulisser la barre formant butée (3) vers l'arrière tout en venant en contact avec une paire de surfaces avant sur une paire de parties de mise en prise (3B) ménagées au niveau des extrémités longitudinales de la barre formant butée (3),
dans laquelle le boîtier de logement (4) inclut une pluralité de nervures (4D) qui sont agencées verticalement sur sa surface interne le long de la direction avant - arrière de façon à comprimer la sangle (W) qui est agencée pour faire face à la surface interne et qui est enroulée autour de la barre formant butée (3), et
dans laquelle les différentes nervures (4D) sont agencées parallèlement l'une à l'autre dans une direction orthogonale à la direction de coulissement de la barre formant butée (3).

2. Languette (1) selon la revendication 1, dans laquelle chacune de la pluralité de nervures (4D) inclut une partie de face de bord qui comprime la sangle (W), la partie de face de bord incluant une partie de face inclinée qui s'étend obliquement vers l'avant de façon à presser la partie de bord arrière de la sangle (W) enroulée autour de la barre formant butée contrainte vers l'arrière par l'unité de sollicitation (5).

3. Languette (1) selon la revendication 2, dans laquelle chacune de la pluralité de nervures (4D) inclut une partie de face plane faisant face à la barre formant butée (3) contrainte vers l'arrière par l'unité de sollicitation (5) depuis la partie de bord avant de la partie de face inclinée.
